# DEMANDE DE BREVET EUROPEEN

(11) **EP 4 322 340 A1**
(43) Date de publication de la demande: **14.02.2024**
(21) Numéro de dépôt: 23189352.0
(22) Date de dépôt: 03.08.2023
(51) Int. Cl.: H01R 13/514, H01R 13/74, H04Q 1/02, H01R 24/64, H01R 13/447

(54) **DISPOSITIF DE RECEPTION DE CONNECTEUR FEMELLE POUR PANNEAU DE BRASSAGE**

(30) Priorité: 10.08.2022 FR 2208220
(71) Demandeur: Cae Data, 91320 Wissous (FR)
(72) Inventeur: CRESPIN, Adil, 91120 Palaiseau (FR)
(74) Mandataire: Axe PI

(57) **Abrégé**

L'invention concerne un dispositif (4) de réception de connecteur (2) femelle pour panneau (3) de brassage, sous forme de boîtier (40) pourvu d'une face (400) avant, de faces (401) latérales et d'une face (402) supérieure, ledit boîtier (40) comprenant un logement (5) défini par le volume intérieur entre lesdites faces (400,401,402), conformé et dimensionné pour l'insertion et l'extraction d'au moins un connecteur (2) femelle ; des moyens (8) de fixation en façade d'un panneau (3) de brassage, caractérisé en ce que ladite face (402) supérieure comprend au moins un capot (9) articulé depuis une position d'ouverture vers une position en recouvrement, et inversement ; en position d'ouverture dudit au moins un capot (9), le dessus dudit au moins un logement (5) étant accessible pour l'insertion et l'extraction par coulissement selon une direction verticale dudit connecteur (2) femelle, ainsi qu'un panneau (3) de brassage équipé d'au moins un tel dispositif (4).

## Description

### DOMAINE TECHNIQUE DE L'INVENTION

La présente invention entre dans le domaine de l'informatique et des télécommunications, en particulier le domaine des structures supports de moyens de communication, préférentiellement téléphonique et informatique.

Dans ce contexte, la connexion à un réseau de téléphonie et informatique fait intervenir une armoire technique, regroupant différents appareils à relier au(x) réseau(x) concerné(s). En fonction de sa structure et de sa taille, une telle armoire technique est communément dénommée « baie de brassage », « coffret de communication », ou bien « armoire de brassage » ou « baie informatique », ou encore « armoire réseau ».

Au sens de la présente invention, le terme « baie de brassage» englobe les différentes définitions susnommées.

Actuellement, une baie de brassage comprend une structure, dont le volume intérieur définit une enceinte, fermée ou ouverte, au sein de laquelle sont rapportés en fixation différents appareils, à relier entre eux et à différents réseaux, comme le réseau d'approvisionnement en électricité, le réseau de communication téléphonique, ou encore un réseau informatique. Ladite structure présente une forme globalement parallélépipédique rectangle, pourvue de montants verticaux parallèles entre eux, reliés par des traverses au moins aux niveaux des extrémités distales desdits montants verticaux, supérieurement et inférieurement. Des parois peuvent refermer cette structure, avec éventuellement une porte en façade.

Plus avant, les montants verticaux situés en face avant présentent au moins en façade, sur toute ou partie de leur longueur, des orifices ménagés traversants et standardisés. De tels orifices sont espacés régulièrement et présentent une section carrée ou rectangulaire. Ils permettent de rapporter en fixation sur la structure un ou plusieurs panneaux, destinés à servir de support aux différents appareils, par exemple un routeur de communication téléphonique ou informatique, un pare-feu, ou encore un clavier déployable, ou bien une simple plaque recevant un appareil posé en face supérieure. Un tel panneau sert donc d'étagère, conférant sa dénomination usuelle de « rack ».

Dans le cadre de la présente invention, ledit panneau est dédié au brassage de câbles de communication. A cet effet, un tel panneau de brassage comprend, répartis régulièrement sur la longueur en façade, des logements destinés à recevoir intérieurement en fixation des connecteurs femelles, aussi dénommés « prises femelles ». Un tel connecteur femelle comprend intérieurement une fiche femelle. D'une part, en face arrière, un tel connecteur femelle est relié à un câblage solidarisé de ladite fiche, tandis que, d'autre part, en façade, ledit connecteur femelle est destiné à coopérer par emboîtement amovible avec un connecteur mâle, ou aussi dénommé « prise mâle», pourvu d'une fiche mâle correspondante, équipant l'extrémité d'un câble externe, ou « cordon de brassage » dans le cas présent.

Ainsi, le raccordement en façade entre deux connecteurs femelles par un cordon de brassage, permet de relier différents matériels d'un réseau de communication, comme par exemple un commutateur réseau.

Ces fiches mâle et femelle sont généralement standardisées, par exemple, de façon non limitative :
- de type connecteur modulaire 8P8C pour « 8 Positions et 8 Contacts » usuellement dénommé « RJ45» (pour « Registred Jack»), usuellement utilisé dans les réseaux informatiques, notamment Ethernet ;
- de type RJ 11 ou RJ 12, usuellement utilisé dans les réseaux téléphoniques ;
- de type numérique ou informatique, comme une interface série, comme le standard USB pour« Universal Serial Bus » ;
- de type coaxial.

### ETAT DE LA TECHNIQUE

Actuellement, l'insertion des connecteurs s'effectue horizontalement depuis l'arrière vers l'avant, et inversement pour l'extraction.

Tout particulièrement, concernant les connecteurs avec une fiche femelle de type « RJ45», les dimensions sont standardisées, comprises dans des plages autorisant leur fixation côte à côte, dans l'espace réservé par chacun des logements. De surcroît, chaque connecteur femelle comprend un organe de verrouillage en fixation au sein d'un logement. Un tel organe se présente généralement sous forme d'une languette élastique, positionnée en face supérieure ou inférieure du connecteur femelle et s'étendant depuis l'arrière vers une extrémité distale flexible à l'avant. L'extrémité distale de cette languette est pourvue d'un redent, destiné à coopérer par encliquetage avec le chant d'un orifice ménagé dans la paroi avant dudit panneau de brassage.

Du fait de ce verrouillage par encliquetage, l'insertion et l'extraction de chaque connecteur femelle par rapport au logement s'effectue par coulissement selon une direction horizontale ou sensiblement horizontale, depuis l'arrière vers l'avant pour l'insertion, et inversement pour l'extraction.

Une telle direction horizontale d'insertion et d'extraction du connecteur femelle présente plusieurs inconvénients. Tout d'abord, du fait que le connecteur est relié par l'arrière à un câblage, ce dernier impose une tension rendant compliqué le déplacement horizontal du connecteur dans l'espace réduit situé derrière la face avant du panneau de brassage.

Pour simplifier l'insertion et l'extraction, les panneaux de brassage peuvent être montés mobiles par rapport aux montants de la baie, depuis une position repliée à l'intérieur vers une position déployée en façade, et inversement. Certains panneaux peuvent aussi être prévus articulés en basculement vers le bas. Ainsi, en position déployé, il est plus facile d'accéder par le haut à l'intérieur du panneau derrière sa paroi avant, pour manipuler les câblages et opérer l'insertion et l'extraction d'un connecteur toujours par déplacement horizontal.

En outre, si l'insertion par encliquetage est aisée, s'opérant de façon élastique, l'extraction nécessite d'appliquer une poussée sur l'extrémité distale de la languette, tout en tirant vers l'arrière le connecteur, opération fastidieuse.

A cet effet, on connaît notamment le document EP3396970 qui concerne un panneau de baie de brassage avec des dispositifs de réception de connecteurs femelles avec des logements dont le volume intérieur est défini par deux parois latérales, une paroi inférieure et une paroi supérieure, ainsi qu'une paroi frontale au sein de laquelle est ménagée un orifice traversant pour le passage de l'extrémité avant de chaque connecteur introduit au sein de son logement. Un tel panneau de brassage s'affranchit de plaque ou platine, communément utilisée, avec des rainures (« slots »). A l'inverse, il est prévu une platine spécifique, avec une ouverture longitudinale, fermée supérieurement. Les connecteurs sont rapportés en fixation au sein des logements par coulissement selon une translation horizontale, depuis l'arrière vers l'avant, et le maintien en fixation de chaque connecteur au sein de son logement est effectué par clipsage ou encliquetage.

Par ailleurs, on connaît le document CN213124972U qui concerne un dispositif de réception de connecteurs femelles de type « Sub-D » ou « D-Sub(miniature) », de format DE-9, couramment appelé « connecteur VGA » (pour « Video Graphic Array »), destiné à faciliter le montage sur des équipements informatiques. De tels connecteurs présentent un corps spécifique, pourvu d'une fente entre une partie arrière et une partie en façade, en vue d'autoriser le glissement du connecteur par rapport au dispositif de réception. Le dispositif de réception comprend une plaque de fixation conformée en L avec une façade verticale pourvue d'une pluralité de rainures de montage. Le dispositif comprend encore une platine amovible, avec des rainures complémentaires. Cette platine est coulissée verticalement, depuis le haut vers le bas, pour maintenir les connecteurs introduits préalablement dans les rainures, aussi par coulissement vertical descendant. Ce maintien est effectué par vissage de la platine au moyen de deux vis. Ce dispositif de réception comprend uniquement des rainures, s'apparentant à des « slots » équipant communément les plaques et platines des équipements informatiques. De telles rainures (« slots ») sont uniquement formées par un orifice de forme parallélépipédique rectangle ou carrée, au sein d'une plaque. Ces rainures (« slots ») présentent donc une épaisseur équivalente à celle de la plaque, sans façade latérale et sans volume intérieur pouvant définir un logement pour la réception d'un connecteur.

### EXPOSE DE L'INVENTION

L'invention a pour but de pallier les inconvénients de l'état de la technique en proposant un dispositif de réception pour connecteur femelle pour panneau de brassage, dont l'insertion et l'extraction de chaque connecteur s'effectue selon une direction verticale.

Pour ce faire, le dispositif de réception se présente sous forme de boîtier pourvu d'une face avant, de faces latérales et d'une face supérieure,
- ledit boîtier comprenant intérieurement un logement défini par le volume intérieur entre lesdites faces, ledit logement étant conformé et dimensionné pour l'insertion et l'extraction d'au moins un connecteur femelle ;
- des moyens de fixation en façade d'un panneau de brassage.

Avantageusement, ledit dispositif de réception se caractérise en ce que
- ladite face supérieure comprend au moins un capot articulé depuis une position d'ouverture vers une position en recouvrement, et inversement ;
- en position d'ouverture dudit au moins un capot, le dessus dudit au moins un logement étant accessible pour l'insertion et l'extraction par coulissement selon une direction verticale dudit au moins un connecteur femelle.

Selon des caractéristiques additionnelles, non limitatives, ledit boîtier peut comprendre au moins deux logements et au moins une paroi intermédiaire s'étendant verticalement et séparant lesdits au moins deux logements ; ledit au moins un capot refermant par paire lesdits au moins deux logements.

Selon un mode de réalisation, ledit boîtier comprend quatre logements.

Selon un mode de réalisation, ledit capot est articulé au travers d'une liaison élastique avec ladite face avant.

Selon un mode de réalisation, ledit au moins un capot comprend une face interne pourvue de moyens de verrouillage en position de recouvrement par encliquetage avec au moins une des faces latérales.

Selon un mode de réalisation, ledit capot comprend une face interne pourvue de moyens de maintien en insertion dudit au moins un connecteur femelle, par appui contre la partie supérieure dudit connecteur femelle, en position en recouvrement dudit capot.

Selon un mode de réalisation, lesdits moyens de maintien comprennent au moins un ergot saillant en face interne dudit capot.

Selon un mode de réalisation, chaque logement comprend
- en partie inférieure, une butée saillante à l'intérieur dudit au moins un logement,
- ladite butée coopérant en blocage horizontal d'une lame équipant ledit au moins un connecteur femelle, en position d'insertion dudit connecteur femelle au sein dudit logement.

Selon un mode de réalisation, lesdits moyens de fixation comprennent en face arrière, une languette de fixation par coulissement plan jusqu'à clipsage avec des moyens de fixation complémentaire ménagés au moins en façade dudit panneau de brassage.

Selon un mode de réalisation, ledit dispositif de réception comprend
- en face avant, en vis-à-vis de chaque logement, un orifice conformé pour recevoir une fiche femelle dudit au moins un connecteur femelle en insertion ;
- un volet de fermeture dudit orifice ;
- ledit volet de fermeture étant articulé en rotation par rapport à ladite face avant.

L'invention concerne encore un panneau de brassage pour baie de brassage, pourvu d'un dispositif de réception selon l'invention.

Plus précisément, un tel panneau de brassage comprend
- un châssis ;
- une paroi en façade dudit châssis, ladite paroi étant pourvue de patte de fixation à des montants verticaux d'une baie de brassage ;
- au moins un connecteur femelle, pourvu d'une fiche femelle ;
- ladite paroi comprenant encore des ouvertures traversantes, chacune étant destinée à recevoir ladite fiche femelle dudit connecteur femelle.

Avantageusement, ledit panneau de brassage se caractérise en ce qu'il comprend
- des moyens de fixation complémentaire ménagés au moins en façade, coopérant avec les moyens de fixation d'au moins un dispositif de réception de connecteur femelle selon l'invention, ledit dispositif de réception étant rapporté en fixation au niveau de ladite au moins une ouverture,
et en ce que
- ledit au moins un connecteur femelle est rapporté en fixation au sein dudit au moins un logement dudit dispositif de réception, par coulissement selon une direction verticale.

Selon des caractéristiques additionnelles, non limitatives, un tel panneau de brassage peut comprendre une pluralité d'ouvertures réparties régulièrement le long de ladite paroi en façade ; plusieurs dispositifs de réception rapportés en fixation en façade dudit châssis et en vis-à-vis desdites ouvertures.

Selon un mode de réalisation, ladite au moins une ouverture est évidée ; ledit au moins un connecteur femelle étant introduit au moins en partie supérieure au travers de ladite ouverture évidée.

Selon un mode de réalisation, les moyens de fixation complémentaire comprennent une fente d'encliquetage d'une languette de fixation équipant lesdits moyens de fixation dudit dispositif de réception, de manière à coopérer par coulissement plan dudit dispositif de réception jusqu'à clipsage de ladite languette avec ladite fente.

### PRESENTATION DES DESSINS

D'autres caractéristiques et avantages de l'invention ressortiront de la description détaillée qui va suivre des modes de réalisation non limitatifs de l'invention, en référence aux figures annexées, dans lesquelles :
La Figure 1 représente schématiquement une vue en perspective d'un mode de réalisation d'un panneau de brassage équipé de plusieurs dispositifs de réception, montrant notamment la paroi en façade destinée à recevoir un desdits dispositifs de réception ;
La Figure 2 représente schématiquement une vue en perspective depuis l'avant d'un mode de réalisation d'un dispositif de réception équipé de deux capots, l'un étant en position d'ouverture tandis que l'autre en position de recouvrement ;
La Figure 3 représente schématiquement une vue en perspective depuis l'arrière d'un mode de réalisation d'un dispositif de réception équipé de deux capots, l'un étant en position d'ouverture tandis que l'autre en position de recouvrement, montrant notamment quatre logements séparés par trois parois intermédiaires, ainsi que les moyens de verrouillage par encliquetage desdits deux capots ;
La Figure 4 représente schématiquement une vue simplifiée en perspective depuis l'arrière d'un mode de réalisation d'un dispositif de réception, lors de l'insertion essentiellement verticalement d'un connecteur femelle au sein d'un des logements ;
La Figure 5 représente schématiquement une vue simplifiée selon une coupe verticale depuis l'arrière d'un mode de réalisation du dispositif de réception pourvu d'un unique capot en position de recouvrement de deux logements, montrant notamment les moyens de verrouillage par encliquetage avec les parois latérales et une paroi intermédiaire ;
La Figure 6 représente schématiquement une vue en perspective depuis l'arrière d'un mode de réalisation du dispositif de réception, au moment de sa fixation en façade d'un panneau de brassage, montrant notamment l'arrière dudit dispositif de réception et la languette de fixation, destinée à coopérer par coulissement jusqu'à clipsage avec une fente équipant ledit panneau de brassage ;
La Figure 7 représente schématiquement une vue simplifiée selon une coupe verticale de la figure 6, montrant notamment le sens de déplacement dudit dispositif de réception par coulissement plan vers la fente dudit panneau de brassage ;
La Figure 8 représente schématiquement une vue similaire à la figure 7, en position de fixation après coulissement plan jusqu'à clipsage de l'extrémité distale de ladite languette avec ladite fente ;
La Figure 9 représente schématiquement une vue simplifiée selon une coupe verticale d'un mode de réalisation du dispositif de réception, montrant l'insertion en coulissement vertical d'un connecteur femelle au sein d'un des logements ;
La Figure 10 représente schématiquement une vue similaire à la figure 9, en position insérée dudit connecteur femelle ; et
La Figure 11 représente schématiquement une vue similaire à la figure 9, en position de maintien du connecteur femelle par fermeture en recouvrement et parappui dudit capot sur ledit connecteur femelle.

### DESCRIPTION DETAILLEE

La présente invention concerne le brassage de câbles 1 dans le domaine de l'informatique et des télécommunications.

Un tel brassage s'opère en raccordant chaque câble 1 à un connecteur 2 femelle, dénommé « prise femelle ».

Comme évoqué précédemment, un tel connecteur 2 femelle comprend intérieurement une fiche femelle. D'une part, en face arrière, ledit connecteur 2 femelle est relié à un câble 1 solidarisé à son extrémité à ladite fiche, tandis que, d'autre part, en façade, ledit connecteur 2 femelle est destiné à coopérer par emboîtement amovible avec un connecteur mâle, ou aussi dénommé « prise mâle», pourvu d'une fiche mâle correspondante, équipant l'extrémité d'un câble externe, ou « cordon de brassage ».

Ainsi, le raccordement en façade entre deux connecteurs 2 femelles par un cordon de brassage, permet de relier différents matériels d'un réseau de communication, comme par exemple un commutateur réseau.

Ces fiches mâle et femelle sont généralement standardisées, par exemple, de façon non limitative : de type connecteur modulaire 8P8C, préférentiellement « RJ45 », usuellement utilisé dans les réseaux informatiques, notamment Ethernet, de type RJ11 ou RJ12, usuellement utilisé dans les réseaux téléphoniques, ou bien de type numérique ou informatique, comme une interface série, comme le standard USB pour« Universal Serial Bus », ou encore de type coaxial.

Plus avant, un tel brassage s'effectue en rapportant en fixation plusieurs connecteurs 2 femelles sur une structure support, de type panneau 3 de brassage.

Un tel panneau 3 de brassage présente un châssis 30, dimensionné de façon standardisée, de manière à être rapporté en fixation sur une structure d'une baie de brassage, en particulier aux niveaux de montants verticaux dont elle est pourvue. Pour ce faire, ledit panneau 3 de brassage comprend une paroi 31 en façade dudit châssis 30, ladite paroi 31 étant pourvue de pattes 32 de fixation auxdits montants verticaux de ladite baie de brassage. Chaque patte 32 est située à droite et à gauche de la façade dudit panneau 3 de brassage.

De plus, ladite paroi 31 comprend des ouvertures 33 traversantes. Chaque ouverture 33 est destinée à recevoir ladite fiche femelle d'un connecteur 2 femelle.

Ceci étant, afin de rapporter en fixation au moins un connecteur 2 femelle au niveau de la paroi 31 en façade du panneau 3 de brassage, l'invention vise un dispositif 4 de réception de connecteur 2 femelle pour panneau 3 de brassage.

Selon l'invention, un tel dispositif 4 de réception se présente sous forme d'un boîtier 40. Un tel boîtier 40 présente une forme globalement parallélépipédique rectangle, avec une face 400 avant, des faces 401 latérales et une face 402 supérieure. La face arrière est partiellement ou totalement ouverte, autorisant le passage dudit connecteur 2 femelle, ainsi que du câble 1 y raccordé.

De fait, ledit boîtier 40 est partiellement creux, destiné à recevoir au moins un connecteur 2 femelle. Ainsi, le boîtier 40 comprend intérieurement un logement 5 défini par le volume intérieur entre lesdites faces 400,401,402. De plus, un tel logement 5 étant conformé et dimensionné pour l'insertion et l'extraction d'au moins un connecteur 2 femelle.

Selon un mode de réalisation, ledit boîtier 40 comprend au moins deux logements 5 et au moins une paroi 403 intermédiaire s'étendant verticalement et séparant lesdits au moins deux logements 5.

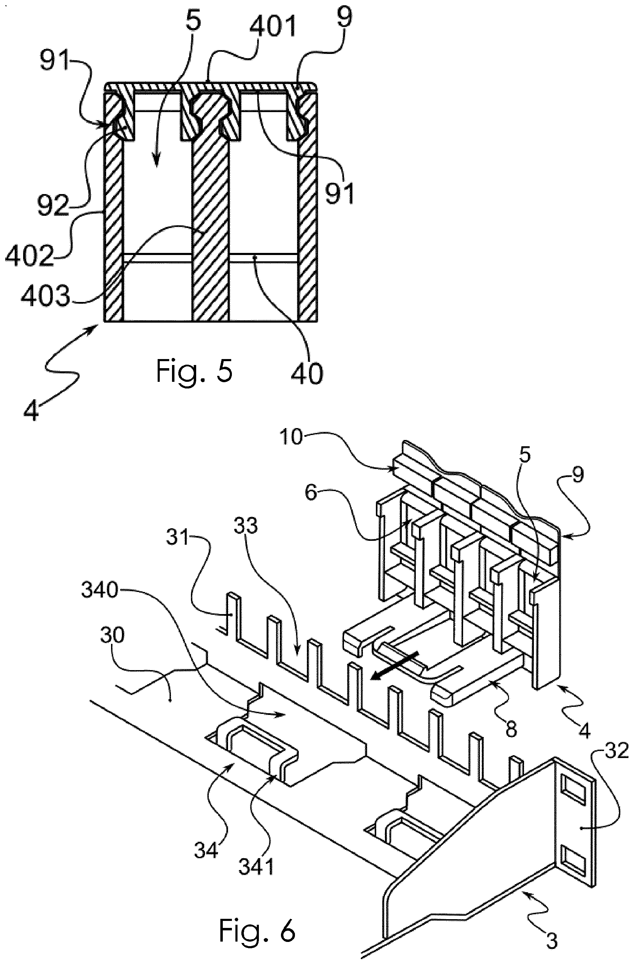

Comme visible sur la figure 5, ledit boîtier 40 du dispositif 4 de réception comprend au moins deux logements 5, séparés par une unique paroi 403 intermédiaire.

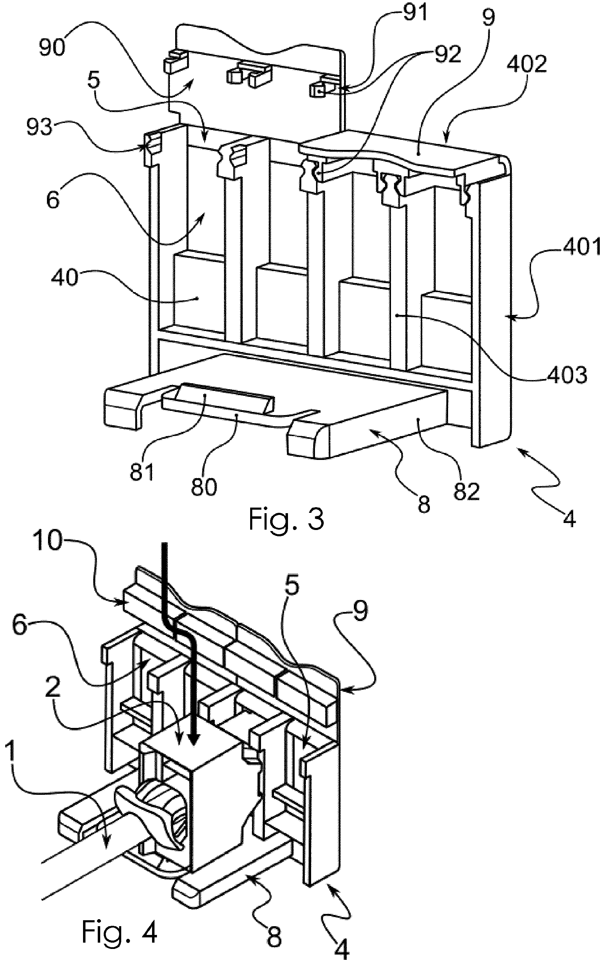

Selon un mode préférentiel de réalisation, comme visible sur les figures 3 et 6, ledit dispositif 4 de réception comprend quatre logements 5, lesdits logements 5 étant séparés deux à deux par une paroi 403 intermédiaire.

Plus avant, afin d'autoriser la connexion d'une fiche mâle avec la fiche femelle du connecteur 2 femelle, une fois introduit au sein d'un logement 5 du dispositif 4 de réception, ledit dispositif 4 de réception comprend, en face 400 avant, en vis-à-vis de chaque logement 5, un orifice 6 conformé pour recevoir ladite fiche femelle dudit au moins un connecteur 2 femelle en insertion. En somme, chaque logement 5 débouche vers l'avant avec un orifice 6 destiné à recevoir une fiche femelle d'un connecteur 2 femelle.

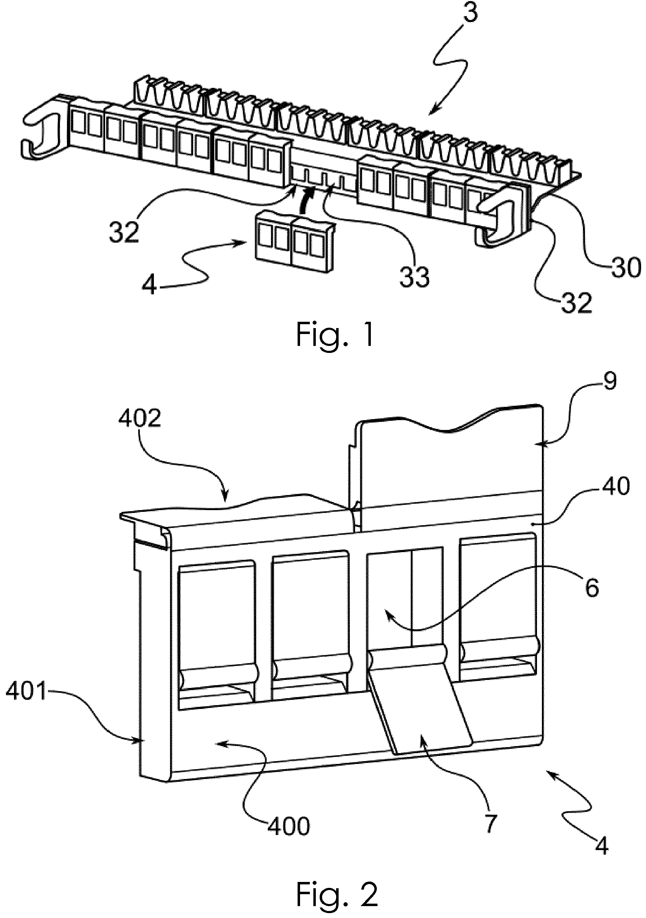

Selon un mode de réalisation, comme visible sur la figure 2, le dispositif 4 de réception comprend un volet 7 de fermeture dudit orifice 6. De plus, ledit volet 7 de fermeture étant articulé en rotation par rapport à ladite face 400 avant. Préférentiellement, ledit volet 7 est articulé vers le bas, mais peut être articulé vers le haut.

Selon un autre mode de réalisation, non représenté, ledit volet 7 est articulé en coulissement, ou bien prévu rapporté en fixation de façon amovible.

Plus avant, le dispositif 4 de réception comprend des moyens 8 de fixation en façade dudit panneau 3 de brassage. En particulier, la fixation est prévue de sorte que les orifices 6 des logements 5 se retrouvent alignés avec les ouvertures 33 de la paroi 31 en façade dudit panneau 3 de brassage.

Lesdits moyen 8 de fixation peuvent être de tout type.

Selon un mode préférentiel de réalisation, lesdits moyens 8 de fixation comprennent en face arrière, une languette 80 de fixation par coulissement plan jusqu'à clipsage avec des moyens 34 de fixation complémentaire ménagés au moins en façade dudit panneau 3 de brassage.

A ce titre, ledit panneau 3 de brassage comprend lesdits moyens 34 de fixation complémentaire, ménagés au moins en façade, coopérant avec les moyens 8 de fixation d'au moins un dispositif 4 de réception, de manière à le rapporter en fixation au niveau de ladite au moins une ouverture 33, préférentiellement chaque orifice 6 en vis-à-vis de chaque ouverture 33.

Selon un mode de réalisation correspondant, lesdits moyens 34 de fixation complémentaire comprennent une fente 340 d'encliquetage de ladite languette 80 de fixation équipant lesdits moyens 8 de fixation dudit dispositif 4 de réception, de manière à coopérer par coulissement plan dudit dispositif 4 de réception jusqu'à clipsage de ladite languette 80 avec ladite fente 340.

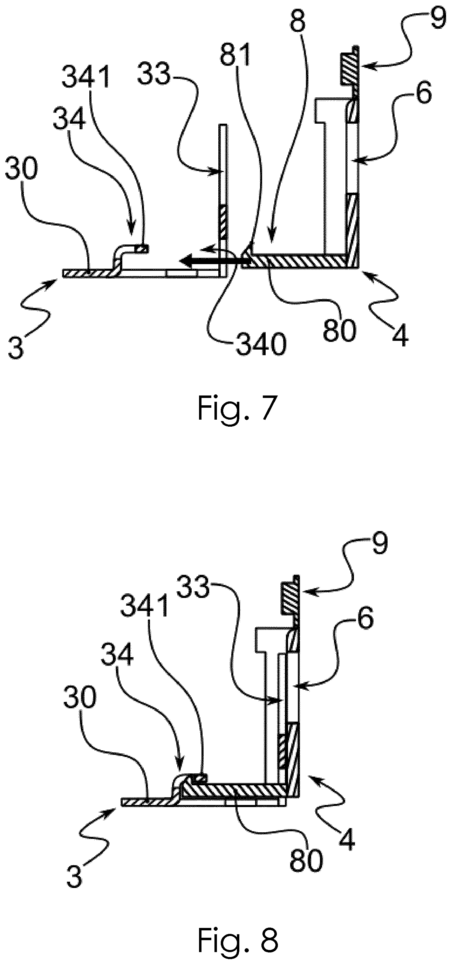

Les figures 6 à 8 montrent la direction essentiellement plane, lors de l'insertion selon une translation horizontale ou sensiblement horizontale de ladite languette 80 au sein de ladite fente 340.

Selon un mode préférentiel de réalisation, l'extrémité distale de ladite languette 80 est pourvue d'un redent 81, destiné à coopérer en insertion et blocage avec un creux ménagé au sein d'un déport 341 interne équipant de façon saillante supérieurement ladite fente 340. En outre, le clipsage dudit redent 81 avec ledit déport 341 peut s'effectuer par déformation élastique du matériau de ladite languette 80, préférentiellement en matériau plastique comprenant une élasticité et/ou une résistance à la flexible correspondante.

En outre, ladite languette 80 peut comprendre, de part et d'autre, des bords 82 latéraux destinés à venir en appui supérieurement en glissement de part et d'autre de ladite fente 340, conférant le caractère de coulissement le long de la face supérieure du châssis 30 du panneau 3 de brassage, lors de l'insertion dudit dispositif 4 de réception.

Avantageusement, l'invention prévoit une insertion et une extraction essentiellement selon une direction verticale dudit connecteur 2 femelle au sein du logement 5 correspondant dudit dispositif 4 de réception.

Une telle insertion verticalement facilite l'opération, en particulier lorsqu'un câble 1 est raccordé par l'arrière à un connecteur 2 femelle à insertion (ou à extraire), évitant les tensions sur ledit câble 1 et les contraintes appliquées aux niveaux des points de raccordement avec la fiche femelle dudit connecteur 2 femelle.

Un tel déplacement vertical ou sensiblement vertical est représenté sur la figure 4, montrant notamment le déplacement d'un connecteur 2 femelle raccordé à un câble 1 lors de son insertion au sein d'un des logements 5 d'un dispositif 4 de réception.

Pour ce faire, le dispositif 4 de réception prévoit que ladite face 402 supérieure comprend au moins un capot 9 articulé depuis une position d'ouverture vers une position en recouvrement, et inversement.

Selon un mode préférentiel de réalisation, quand ledit boîtier 40 comprend quatre logements 5, alors deux capots 9 referment par paire deux desdits logements 5 adjacents situés d'un côté et de l'autre dudit dispositif 4 de réception.

De plus, en position d'ouverture dudit au moins un capot 9, le dessus dudit au moins un logement 5 est accessible pour l'insertion et l'extraction par coulissement selon une direction verticale dudit au moins un connecteur 2 femelle. En d'autres termes, en ouvrant le capot 9, on ménage un espace ouvert au-dessus de chaque logement 5, permettant l'introduction verticalement ou sensiblement verticalement d'un connecteur 2 femelle au sein du logement 5 correspondant. En outre, avec la face arrière ouverte, il est possible de glisser aisément le connecteur 2 femelle, en limitant les tensions appliquées au câble 1.

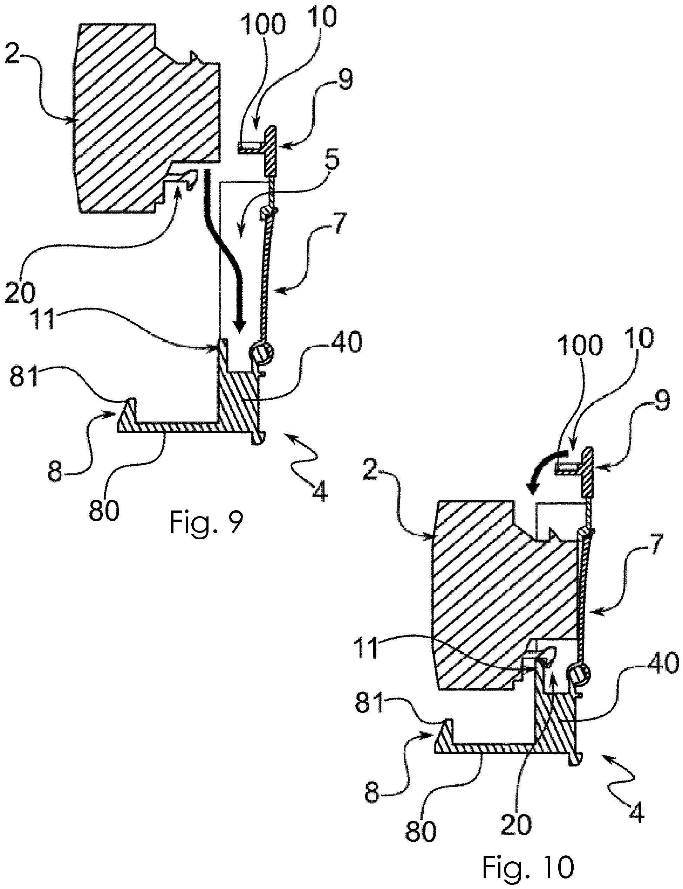

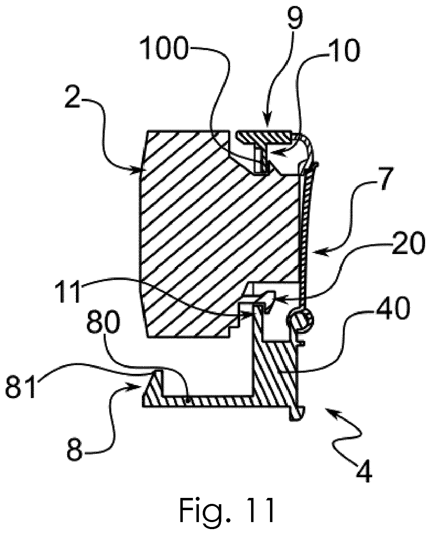

Un tel mouvement descendant lors de l'insertion d'un connecteur 2 femelle est représenté sur la figure 4, ainsi que sur les figures 9 à 11.

Selon un mode de réalisation, quand ledit boîtier 40 comprend au moins deux logements 5, alors ledit au moins un capot 9 referme par paire lesdits au moins deux logements 5.

Inversement, ledit au moins un capot 9 est articulé depuis la position en recouvrement vers ladite position d'ouverture. En particulier, en position de recouvrement, ledit au moins un capot 9 obture la face 402 supérieure, refermant le ou les logements 5 situé en-dessous. En somme, en position refermée du capot 9, chaque logement 5 n'est plus accessible par le dessus, mais uniquement par la face arrière, toujours ouverte.

Selon un mode préférentiel de réalisation, ledit capot 9 est articulé au travers de tout type de liaison, par exemple au travers d'une liaison en rotation ou pivotement au moyen d'une charnière.

Selon un mode préférentiel de réalisation, ledit capot 9 est articulé au travers d'une liaison élastique avec ladite face 400 avant. En d'autres termes, c'est la caractéristique élastique du matériau qui autorise le passage depuis la position en recouvrement vers la position d'ouverture, ou inversement.

En outre, l'élasticité de l'articulation dudit capot 9 peut permettre le retour depuis la position de recouvrement vers la position d'ouverture (ou inversement).

Selon un mode de réalisation, l'invention prévoit de maintenir le capot 9 en position de recouvrement du ou des logements 5, à savoir refermé.

Pour ce faire, ledit au moins un capot 9 comprend une face 90 interne pourvue de moyens 91 de verrouillage en position de recouvrement par encliquetage avec au moins une des faces 401 latérales.

Selon un mode préférentiel de réalisation, lesdits moyens 91 de verrouillage coopèrent de part et d'autre de deux logements 5 avec la ou les faces 400 latérales correspondantes, ainsi qu'avec la paroi 403 intermédiaire.

Selon un mode de réalisation, lesdits moyens 91 de verrouillage comprennent des crochets 92, chacun desdits crochets 92 étant destiné à coopéreren encliquetage avec des creux 93 ménagés intérieurement au sein des faces 401 latérales.

Préférentiellement, ces crochets 92 sont au nombre de deux par logement 5, à savoir quatre par capot 9. De plus, les deux crochets 92 situés au centre coopèrent de part et d'autre de la paroi 403 intermédiaire délimitant lesdits deux logements 5, tandis que les deux autres crochets 92 coopèrent intérieurement avec chacun des parois 403 latérales droite et gauche.

L'exemple de réalisation visible sur la figure 5 montre une telle coopération pour un dispositif 4 de réception pourvu de deux logements 5 et d'un seul capot 9.

Selon un autre mode de réalisation, comme visible sur la figure 3, chaque capot 9 comprend quatre crochets 92 : les deux crochets 92 situés au centre de chaque capot 9 coopèrent de part et d'autre de la paroi 403 intermédiaire délimitant lesdits deux logements 5 sous chacun desdits deux capots 9, tandis que les crochets 92 situés de chaque côté de chaque capot 9 coopèrent avec, d'une part, un paroi 403 intermédiaire centrale séparant deux parties desdits logements 5 et, d'autre part avec une des parois 401 latérales dudit dispositif 4 de réception.

Selon un mode de réalisation, l'invention prévoit de maintenir le connecteur 2 femelle une fois introduit dans un logement 5 du dispositif 4 de réception.

Pour ce faire, ledit capot 9 comprend une face 90 interne pourvue de moyens 10 de maintien en insertion dudit au moins un connecteur 2 femelle, par appui contre la partie supérieure dudit connecteur 2 femelle, en position en recouvrement dudit capot 9. En d'autres termes, refermé, le capot 9 appuie sur le haut du connecteur 2 femelle, pour empêcher toute liberté de mouvement vertical au sein dudit logement 5.

Selon un mode de réalisation, lesdits moyens 10 de maintien comprennent au moins un ergot 100 saillant en face interne dudit capot 9. Un tel ergot 100 peut être de toute forme, notamment sous forme parallélépipédique rectangle, préférentiellement creux conformé en U ou C. C'est alors l'extrémité distale dudit ergot 100 qui vient contre la face supérieure du connecteur 2 femelle, en position de recouvrement dudit capot 9.

Selon un mode préférentiel de réalisation, ledit capot 9 comprend des moyens 10 de verrouillage pour chaque logement 5, à savoir pourvus d'autant d'ergots 100 que de logements 5 (i.e. de connecteur 2 femelle à maintenir).

Selon un mode de réalisation, prévoit aussi de maintenir horizontalement ledit connecteur 2 femelle une fois introduit dans le logement 5 correspondant.

Pour ce faire, chaque logement 5 comprend en partie inférieure, une butée 11 saillante à l'intérieur dudit au moins un logement 5. De plus, une telle butée 11 coopère en blocage horizontal d'une lame 20 équipant ledit au moins un connecteur 2 femelle, en position d'insertion dudit connecteur 2 femelle au sein dudit logement 5.

On notera que ladite lame 20 dudit connecteur 2 femelle peut être un organe standardisé de verrouillage en fixation. Un tel organe de verrouillage se présente généralement sous forme d'une languette élastique, positionnée en face supérieure ou inférieure du connecteur 2 femelle et s'étendant depuis l'arrière vers une extrémité distale prévue flexible à l'avant dudit connecteur 2 femelle. L'extrémité distale de cette languette est pourvue d'un redent ou ergot, destiné à coopérer par encliquetage. Un tel organe de verrouillage est usuellement utilisé pour une insertion connue selon une direction essentiellement horizontale.

C'est donc l'extrémité distale et son ergot ou redent qui viennent coopérer pour bloquer horizontalement le connecteur 2 femelle une fois introduit au sein du logement 5 correspondant.

Un exemple d'une telle configuration est notamment visible sur les figures 9 à 11.

En outre, lors du recouvrement par le capot 9, le maintien par appui dudit capot 9, notamment de son ergot 100 des moyens 10 de maintien, assure le maintien en butée de ladite extrémité distale de ladite lame 20 du connecteur 2 femelle.

De façon subsidiaire, ledit connecteur 2 femelle peut aussi être équipé, en face supérieure, d'un ergot ou redent saillant, assurant le blocage horizontalement en butée contre un bord de l'ergot 100 des moyens 10 de maintien.

Ainsi, une fois introduit verticalement dans un logement 5, chaque connecteur 2 femelle y est maintenu.

L'invention concerne aussi un panneau 3 de brassage, équipé d'un ou plusieurs dispositifs 4 de réception selon l'invention.

Comme évoqué précédemment, ledit panneau 3 de brassage comprend un châssis 30 avec une paroi 31 en façade dudit châssis 30, ladite paroi 31 étant pourvue de pattes 32 de fixation à des montants verticaux d'une baie de brassage.

Ladite paroi 31 comprend encore des ouvertures 33 traversantes, chacune étant destinée à recevoir ladite fiche femelle dudit au moins un connecteur 2 femelle. De telles ouvertures 33 sont conformées globalement en carré et son répartis régulièrement sur la longueur de ladite paroi 31 en façade.

De plus, ledit panneau 3 de brassage comprend au moins un connecteur 2 femelle, de préférence plusieurs, chacun étant pourvu d'une fiche femelle.

Avantageusement, ledit panneau 3 de brassage comprend les moyens 34 de fixation complémentaire ménagés au moins en façade, coopérant avec les moyens 8 de fixation d'au moins un dispositif 4 de réception de connecteur 2 femelle selon l'invention. En outre, ledit dispositif 4 de réception est rapporté en fixation au niveau de ladite au moins une ouverture 33.

De surcroît, ledit au moins un connecteur 2 femelle est rapporté en fixation au sein dudit au moins un logement 5 dudit dispositif 4 de réception, par coulissement selon une direction verticale.

Tout particulièrement, plusieurs connecteurs 2 femelle sont introduit par coulissement vertical au sein de certains ou de tous les logements 5 de chaque dispositif 4 de réception, une fois montés en fixation sur la paroi 31 en façade dudit panneau 3 de brassage.

Selon un mode de réalisation, ledit panneau 3 de brassage comprend une pluralité d'ouvertures 33 réparties régulièrement le long de ladite paroi 31 en façade. Dès lors, plusieurs dispositif 4 de réception sont rapportés en fixation en façade dudit châssis 30 et en vis-à-vis desdites ouvertures 33. En particulier, un dispositif 4 de réception avec deux logements 5 est rapporté en vis-à-vis de deux ouvertures 33, tandis qu'un dispositif 4 de réception pourvu de quatre logements 5 est fixé en vis-à-vis de quatre ouvertures 33 contiguës.

Selon un mode de réalisation, comme visible sur la figure 6, ladite au moins une ouverture 33 est évidée supérieurement. En somme, l'ouverture 33 présente globalement une forme en U.

Dès lors, ledit au moins un connecteur 2 femelle est introduit au moins en partie supérieure au travers de ladite ouverture 33 évidée. En outre, l'insertion dudit connecteur 2 femelle s'effectue quand le capot 9 correspondant est en position d'ouverture, laissant libre l'accès par le dessus audit dispositif 4 de réception.

## Revendications

1. Dispositif (4) de réception de connecteur (2) femelle pour panneau (3) de brassage,
- sous forme de boîtier (40) pourvu d'une face (400) avant, de faces (401) latérales et d'une face (402) supérieure,
- ledit boîtier (40) comprenant intérieurement un logement (5) défini par le volume intérieur entre lesdites faces (400,401,402), ledit logement (5) étant conformé et dimensionné pour l'insertion et l'extraction d'au moins un connecteur (2) femelle ;
- des moyens (8) de fixation en façade d'un panneau (3) de brassage ; **caractérisé en ce que**
- ladite face (402) supérieure comprend au moins un capot (9) articulé depuis une position d'ouverture vers une position en recouvrement, et inversement ;
- en position d'ouverture dudit au moins un capot (9), le dessus dudit au moins un logement (5) étant accessible pour l'insertion et l'extraction par coulissement selon une direction verticale dudit au moins un connecteur (2) femelle.

2. Dispositif (4) de réception selon la revendication précédente, **caractérisé en ce que**
- ledit boîtier (40) comprend au moins deux logements (5) et au moins une paroi (403) intermédiaire s'étendant verticalement et séparant lesdits au moins deux logements (5) ;
- ledit au moins un capot (9) refermant par paire lesdits au moins deux logements (5).

3. Dispositif (4) de réception selon la revendication précédente, **caractérisé en ce que** ledit boîtier (40) comprend quatre logements (5).

4. Dispositif (4) de réception selon l'une quelconque des revendications précédentes, **caractérisé en ce que** ledit capot (9) est articulé au travers d'une liaison élastique avec ladite face (400) avant.

5. Dispositif (4) de réception selon l'une quelconque des revendications précédentes, **caractérisé en ce que** ledit au moins un capot (9) comprend une face (90) interne pourvue de moyens (91) de verrouillage en position de recouvrement par encliquetage avec au moins une des faces (401) latérales.

6. Dispositif (4) de réception selon l'une quelconque des revendications précédentes, **caractérisé en ce que** ledit capot (9) comprend une face (90) interne pourvue de moyens (10) de maintien en insertion dudit au moins un connecteur (2) femelle, par appui contre la partie supérieure dudit connecteur (2) femelle, en position en recouvrement dudit capot (9).

7. Dispositif (4) de réception selon la revendication précédente, **caractérisé en ce que** lesdits moyens (10) de maintien comprennent au moins un ergot (100) saillant en face interne dudit capot (9).

8. Dispositif (4) de réception selon l'une quelconque des revendications précédentes, **caractérisé en ce que** chaque logement (5) comprend
- en partie inférieure, une butée (11) saillante à l'intérieur dudit au moins un logement (5),
- ladite butée (11) coopérant en blocage horizontal d'une lame (20) équipant ledit au moins un connecteur (2) femelle, en position d'insertion dudit connecteur (2) femelle au sein dudit logement (5).

9. Dispositif (4) de réception selon l'une quelconque des revendications précédentes, **caractérisé en ce que** lesdits moyens (8) de fixation comprennent en face arrière, une languette (80) de fixation par coulissement plan jusqu'à clipsage avec des moyens (34) de fixation complémentaire ménagés au moins en façade dudit panneau (3) de brassage.

10. Dispositif (4) de réception selon l'une quelconque des revendications précédentes, **caractérisé en ce qu'**il comprend
- en face (400) avant, en vis-à-vis de chaque logement (5), un orifice (6) conformé pour recevoir une fiche femelle dudit au moins un connecteur (2) femelle en insertion ;
- un volet (7) de fermeture dudit orifice (6) ;
- ledit volet (7) de fermeture étant articulé en rotation par rapport à ladite face (400) avant.

11. Panneau (3) de brassage pour baie de brassage, comprenant
- un châssis (30) ;
- une paroi (31) en façade dudit châssis (30), ladite paroi (31) étant pourvue de pattes (32) de fixation à des montants verticaux d'une baie de brassage ;
- au moins un connecteur (2) femelle, pourvu d'une fiche femelle ;
- ladite paroi (31) comprenant encore des ouvertures (33) traversantes, chacune étant destinée à recevoir ladite fiche femelle dudit connecteur (2) femelle,
**caractérisé en ce qu'**il comprend
- des moyens (34) de fixation complémentaire ménagés au moins en façade, coopérant avec les moyens (8) de fixation d'au moins un dispositif (4) de réception de connecteur (2) femelle selon l'une quelconque des revendications précédentes, ledit dispositif (4) de réception étant rapporté en fixation au niveau de ladite au moins une ouverture (33),
et **en ce que**
- ledit au moins un connecteur (2) femelle est rapporté en fixation au sein dudit au moins un logement (5) dudit dispositif (4) de réception, par coulissement selon une direction verticale.

12. Panneau (3) de brassage selon la revendication précédente, **caractérisé en ce qu'**il comprend
- une pluralité d'ouvertures (33) réparties régulièrement le long de ladite paroi (31) en façade ;
- plusieurs dispositifs (4) de réception rapportés en fixation en façade dudit châssis (30) et en vis-à-vis desdites ouvertures (33).

13. Panneau (3) de brassage selon la revendication 11 ou 12, **caractérisé en ce que**
- ladite au moins une ouverture (33) est évidée ;
- ledit au moins un connecteur (2) femelle étant introduit au moins en partie supérieure au travers de ladite ouverture (33) évidée.

14. Panneau (3) de brassage selon l'une quelconques des revendications 11 à 13, **caractérisé en ce que** les moyens (34) de fixation complémentaire comprennent une fente (340) d'encliquetage d'une languette (80) de fixation équipant lesdits moyens (8) de fixation dudit dispositif (4) de réception, de manière à coopérer par coulissement plan dudit dispositif (4) de réception jusqu'à clipsage de ladite languette (80) avec ladite fente (340).
